# EUROPÄISCHE PATENTSCHRIFT

(11) **EP 1 293 381 B1**
(45) Veröffentlichungstag und Bekanntmachung des Hinweises auf die Patenterteilung: **26.03.2008**
(21) Anmeldenummer: 02017880.2
(22) Anmeldetag: 09.08.2002
(51) Int. Cl.: B60Q 1/48

(54) **System zur Erfassung und Anzeige des Abstandes von Fahrzeugen zu Hindernissen sowie Stossfänger**
System for measuring and displaying the distance between a vehicle and an object, and vehicle bumper
Système pour la mesure et l'affichage de la distance d'un véhicule à un objet, ainsi qu'un pare-choc de vehicule

(30) Priorität: 12.09.2001 DE 10144829
(43) Veröffentlichungstag der Anmeldung: 19.03.2003
(73) Patentinhaber: Valeo Schalter und Sensoren GmbH, 74321 Bietigheim-Bissingen (DE)
(72) Erfinder: Mathes, Joachim, 74080 Heilbronn (DE); Gotzig, Heinrich, Dr., 74081 Heilbronn (DE); Hoffsommer, Klaus, 74321 Bietigheim-Bissingen (DE); Lill, Anton, 74348 Lauffen (DE)
(74) Vertreter: Dreiss, Fuhlendorf, Steimle & Becker

(56) Entgegenhaltungen:
- WO-A-01/65519
- DE-A- 10 018 807
- DE-A- 10 037 129
- DE-C- 19 909 535
- US-A- 6 114 950

## Beschreibung

Die Erfindung betrifft ein System zur Erfassung und Anzeige des Abstandes von Fahrzeugen zu Hindernissen, mit einer zentralen Steuereinheit, mit mehreren Abstandsmesssensoren und mit einem akustischen und/oder optischen Abstandsanzeigegerät, wobei die zentrale Steuereinheit mit den Abstandsmesssensoren, mit dem Abstandsanzeigegerät und mit weiteren Fahrzeugsystemen, insbesondere einem BUS-System und/oder einem Taster und/oder einem Geschwindigkeitsmesssystem, verbunden ist.

Die zentrale Steuereinheit erfüllt regelmäßig eine Vielzahl von Systemfunktionen, zu denen zählen: Kommunikation mit den Sensoren, Spannungs- und Masseversorgung der Sensoren, Ansteuerung von Fahrerinformationssystemen, Auswertung unterschiedlicher Fahrzeugzustände und unterschiedlicher Bedienelementen, Auswertung von BUS-Informationen, Ausgabe von Diagnoseinformationen, Speicherung von Codierdaten der Sensoren und von stoßfängerspezifischen Daten.

Das Abstandsanzeigegerät zeigt den Abstand zwischen Fahrzeug und Hindernis beispielsweise akustisch über Lautsprecher oder optisch über Displays an.

Zur zentralen Steuereinheit führen entweder separate Leitungen von Tastern, von Fahrtrichtungserkennungssystemen, von Geschwindigkeitsmesssystemen, von Anhängern, falls solche vorhanden sind, und/oder von Diagnoseschnittstellen. Bei moderneren Fahrzeugen können diese Informationen auch über ein BUS-System der zentralen Steuereinheit übermittelt werden.

Die bekannten Systeme umfassen in der Regel zwischen zwei bis sechs Abstandsmesssensoren im Bereich der Stoßfänger. Die Abstandsmesssensoren können beispielsweise als Ultraschallsensoren, Radarsensoren, optische Sensoren und/oder ähnliche Sensoren, ggf. mit zugehörigen Subsystemen, ausgebildet sein. Zwischen den Sensoren und der zentralen Steuereinheit ist ein relativ hoher Verkabelungsaufwand zu betreiben.

Aus der gattungsbildenden WO 01/65519 A1 ist Sensorträger für ein Abstandsradarsystem bekannt geworden, bei dem ein Systemprozessor, der von Sensoren erzeugte Informationen sammelt, und ein Fahrzeugprozessor, der die Informationen des Systemprozessor auswertet, vorgesehen.

Aus der DE 100 37 129 A1 ist eine Einpark- und Rangierhilfeeinrichtung bekannt geworden, bei der neben einer Steuereinheit für Radarsensoren auch ein übergeordnetes Steuergerät vorgesehen ist.

Aus der DE 199 09 535 C1 ist ein Datenübertragungsverfahren bekannt geworden, bei dem mehrere Steuereinheiten Verwendung finden.

Der vorliegenden Erfindung liegt deshalb die Aufgabe zugrunde, den Verkabelungsaufwand innerhalb des Fahrzeuges erheblich zu reduzieren.

Diese Aufgabe wird mit einem System mit den Merkmalen des Anspruchs 1 gelöst.

Die Erfindung hat den Vorteil, dass Verkabelungsaufwand zwischen der zentralen Steuereinheit und den jeweiligen Abstandsmesssensoren entfällt. Durch Anbinden der dezentralen Steuereinheit an die zentrale Steuereinheit über ein BUS-System ist lediglich zwischen der dezentralen Steuereinheit und den einzelnen Abstandsmesssensoren eine Verkabelung für die Versorgung und die Kommunikation der Sensoren mit der dezentralen Steuereinheit erforderlich. Vorteilhafterweise kommuniziert lediglich die dezentrale Steuereinheit direkt mit den Abstandsmesssensoren. Die von den Abstandsmesssensoren erfassten Abstandsinformationen werden also von der dezentralen Steuereinheit über das BUS-System an die zentrale Steuereinheit gesendet. Bei dem BUS-System kann es sich um ein CAN- oder LIN-BUS-System handeln.

Die Umsetzung der über das BUS-System der zentralen Steuereinheit übersandten Abstandsinformationen erfolgt vorzugsweise in der zentralen Steuereinheit, die das Abstandsanzeigegerät steuert.

Dabei können die Funktionen des zentralen Steuergeräts auf mehrere, dem zentralen Steuergerät nachgeschaltete weitere Steuereinheiten, aufgeteilt sein. So kann beispielsweise der Schaltkonsolen ECU die Aktivierung, der Bordcomputer ECU die optische Anzeige und das Bordradio die akustische Anzeige steuern.

Gemäß der Erfindung sind die Abstandsmesssensoren und auch die dezentrale Steuereinheit im Bereich eines Stoßfängers des Fahrzeuges angeordnet. Aufgrund der räumlichen Nähe zwischen der dezentralen Steuereinheit und den entsprechenden Sensoren kann Verkabelungsaufwand minimiert werden.

Denkbar ist auch, dass im Bereich eines vorderen Stoßfängers Abstandsmesssensoren und eine erste dezentrale Steuereinheit und im Bereich des hinteren Stoßfängers Abstandsmesssensoren und eine zweite dezentrale Steuereinheit angeordnet sind. Auch hierdurch wird im Fahrzeug erheblicher Verkabelungsaufwand eingespart.

Bei der Erfindung ist zudem vorgesehen, dass die dezentrale Steuereinheit Codierdaten der Abstandsmesssensoren speichert und verarbeitet. Dies hat den Vorteil, dass die zentrale Steuereinheit unabhängig von den letztlich im Stoßfänger verbauten Abstandsmesssensoren vorprogrammiert werden kann. Die abstandsmesssensorspezifischen Codierdaten werden in der vorzugsweise am Stoßfänger anzuordnenden dezentralen Steuereinheit abgelegt.

Ferner ist vorgesehen, dass die dezentrale Steuereinheit stoßfängerspezifische Daten speichert und verarbeitet. Das Messverhalten der Abstandsmesssensoren wird grundsätzlich von der Beschaffenheit der Stoßfänger, d.h. von stoßfängerspezifischen Daten, beeinflusst. Die stoßfängerspezifischen Daten können hierbei zum einen die räumlichen Geometrien des Stoßfängers, zum anderen auch die Oberflächenbeschaffenheit und das Abstrahlverhalten des Stoßfängers beinhalten. Bei entsprechenden Lackierungen des Stoßfängers und u.U. auch des Abstandsmesssensors treten insbesondere bei Abstandsmesssensoren in Form von Ultraschallwandlern sehr unterschiedliche Messwerte auf. Dadurch, dass die stoßfängerspezifischen Daten in der dezentralen Steuereinheit, die vorteilhafterweise am Stoßfänger selbst angeordnet ist, abgelegt werden, kann die zentrale Steuereinheit einheitlich, für verschiedene Arten von Stoßfängern, programmiert werden.

Eine weitere Ausführungsform der Erfindung kennzeichnet sich dadurch, dass die dezentrale Steuereinheit von der zentralen Steuereinheit über das BUS-System gesendete Aktivierungs- und/oder Deaktivierungsinformationen liest und verarbeitet. Dies hat den Vorteil, dass eine Aktivierung bzw. eine Deaktivierung der dezentralen Steuereinheit und der Sensoren gezielt und einheitlich von der zentralen Steuereinheit erfolgen kann. Beim Rückwärtsfahren werden so beispielsweise nur die im Heckstoßfänger vorhandenen Abstandsmesssensoren mit zugehöriger dezentralen Steuereinheit aktiviert. Beim Vorwärtseinparken werden entsprechend nur die im Frontstoßfänger angeordneten Abstandsmesssensoren mit zugehöriger dezentralen Steuereinheit aktiviert.

Zur vorteilhaften und einfachen Montage eines Stoßfängers mit dezentraler Steuereinheit und entsprechenden Abstandsmesssensoren ist erfindungsgemäß vorgesehen, dass die Verbindung zwischen der zentralen Steuereinheit und der dezentralen Steuereinheit eine lösbare Schnittstelle aufweist.

Die Erfindung hat auch den Vorteil, dass der Stoßfänger als separat handzuhabende Baugruppe ausgebildet sein kann und sowohl die stoßfänger- als auch die abstandsmesssensorspezifischen Daten des Stoßfängers in der dezentralen Steuereinheit niedergelegt werden können. Die zentrale Steuereinheit kann demnach für verschiedene Stoßfänger- und/oder Abstandsmesssensorausführungen einheitlich programmiert werden. Vorteilhafterweise sind alle abstandsmesssensor- und stoßfängerspezifischen Daten, die zur Bestimmung des Abstands zwischen dem Stoßfänger und dem Fahrzeug relevant sind, in der dezentralen Steuereinheit niedergelegt.

Weitere Vorteile und vorteilhafte Ausgestaltungen der Erfindung sind der nachfolgenden Beschreibung zu entnehmen, in der die Erfindung anhand eines Ausführungsbeispiels näher beschrieben und erläutert ist.

In der Zeichnung zeigen:
- Fig. 1:: ein System zur Erfassung und Anzeige des Abstandes von Fahrzeugen zu Hindernissen nach dem bekannten Stand der Technik; und
- Fig. 2:: ein erfindungsgemäßes System zur Erfassung und Anzeige des Abstandes von Fahrzeugen zu Hindernissen.

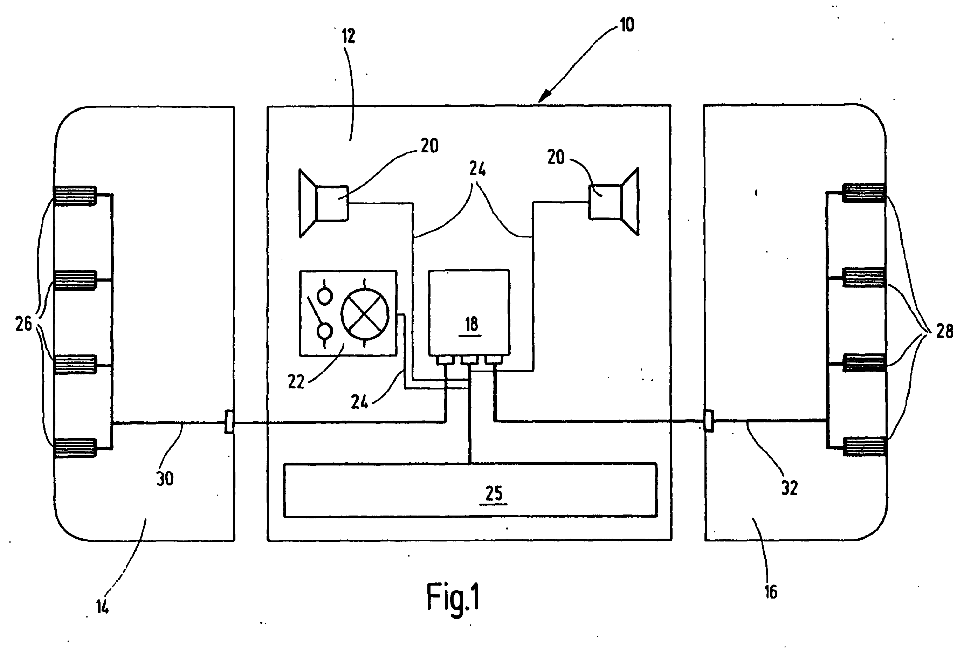

Fig. 1 zeigt ein bekanntes System 10 zur Erfassung und Anzeige des Abstandes von Fahrzeugen zu Hindernissen. Schematisch angedeutet ist ein Fahrzeug 12, das an seiner vorderen Seite einen Frontstoßfänger 14 und an seiner hinteren Seite einen Hecksstoßfänger 16 aufweist. Das System 10 umfasst fahrzeugseitig eine zentrale Steuereinheit 18, ein akustisches Abstandsanzeigegerät 20 in Form von zwei Lautsprechern und ein optisches Abstandsanzeigegerät 22 in Form einer Beleuchtungseinheit. Die Anzeigegeräte 20 und 22 sind über Versorgungs- und Kommunikationsleitungen 24 mit der zentralen Steuereinheit 18 verbunden.

Die zentrale Steuereinheit 18 ist außerdem über ein BUS-System 25 mit weiteren Fahrzeugsystemen verbunden. Hierzu zählen insbesondere ein Geschwindigkeitsmesssystem sowie ein Tastsystem zum manuellen Aktivieren und Deaktivieren des Systems 10.

Das System 10 umfasst ferner an jedem Stoßfänger 14, 16 jeweils vier Abstandsmesssensoren 26, 28. Die Abstandsmesssensoren 26, 28 sind mittels Versorgungs- und Kommunikationsleitungen 30 und 32 mit der zentralen Steuereinheit 18 verbunden.

Nachteil eines derartigen Systems ist der hohe Verkabelungsaufwand; zwischen der zentralen Steuereinheit 18 und den insgesamt acht Abstandsmesssensoren 26 und 28 sind sowohl Leitungen zur Versorgung der Sensoren als auch zur Kommunikation mit den Sensoren vorzusehen.

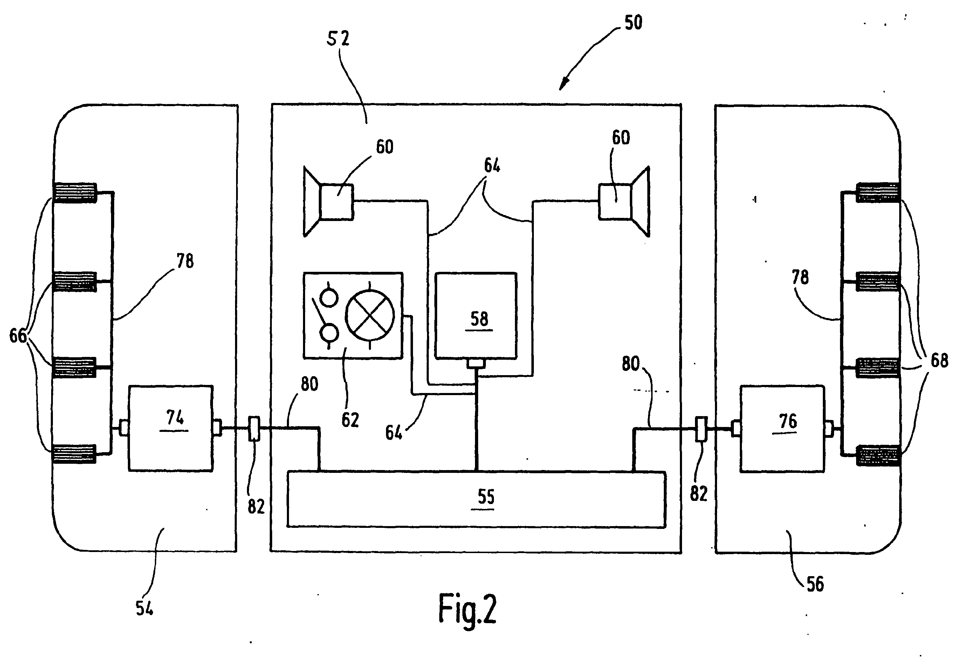

Die Fig. 2 zeigt ein erfindungsgemäßes System 50 zur Erfassung und Anzeige des Abstandes von Fahrzeugen zu Hindernissen. Die Fig. 2 zeigt entsprechend Fig. 1 ein Fahrzeug 52 mit einem Frontstoßfänger 54 und einem Heckstoßfänger 56. Fahrzeugseitig sind entsprechend der Fig. 1 eine zentrale Steuereinheit 58, Anzeigegeräte 60 und 62 sowie zugehörige Leitungen 64 dargestellt. Ferner ist die zentrale Steuereinheit 58 mit einem BUS-System 55 verbunden.

Entsprechend der Fig. 1 sehen die Stoßfänger 54 und 56 ebenfalls jeweils vier Abstandsmesssensoren 66 und 68 vor.

Im Gegensatz zu dem System 10 gemäß Fig. 1 umfasst das System 50 gemäß Fig. 2 an jedem Stoßfänger 54, 56 jeweils eine dezentrale Steuereinheit 74, 76. Die dezentralen Steuereinheiten 74, 76 sind über Versorgungs- und Kommunikationsleitungen 78 mit den jeweiligen Sensoren 66, 68 verbunden. Die dezentralen Steuereinheiten 74, 76 sind ferner über Leitungen 80 mit dem BUS-System 55 verbunden.

Hierdurch wird erreicht, dass Verkabelungsaufwand zwischen der zentralen Steuereinheit 58 und den Sensoren 66, 68 verringert wird. Eine direkte Verkabelung der Sensoren 66, 68 mit der zentralen Steuereinheit 58 entfällt.

Die in der Fig. 2 dargestellte Ausführungsform der Erfindung hat ferner den Vorteil, dass sämtliche sensorspezifischen Daten sowie sämtliche stoßfängerspezifischen Daten in der zu den jeweiligen Stoßfängern 54, 56 zugehörigen dezentralen Steuereinheit 74, 76 abgelegt sind. Die Programmierung der zentralen Steuereinheit 54 kann demnach unabhängig von den Ausführungsformen der Stoßfänger 54, 56 sowie auch unabhängig von den Ausführungen der Sensoren 66, 68 erfolgen.

Ferner können die Stoßfänger 54, 56 mit den Sensoren 66, 68 und den dezentralen Steuereinheiten 74, 76 als separate Baugruppen gehandhabt werden. Zum einfachen Austausch der Stoßfänger 54, 56 sind an den Leitungen 80 lösbare Schnittstellen 82 vorgesehen.

Die dezentralen Steuereinheiten 74, 76 haben hierbei folgende Funktionen: Kommunikation mit den Sensoren 66, 68, Spannungs- und Masseversorgung der Sensoren 66, 68, Senden von Abstandsinformationen von den Sensoren 66, 68 über das BUS-System 55 zu der zentralen Steuereinheit 58, Lesen und Verarbeiten von Aktivierungsinformationen, die von der zentralen Steuereinheit 58 über das BUS-System 55 zu den dezentralen Steuereinheiten 74, 76 werden, Speichern von Codierdaten der Sensoren und von stoßfängerspezifischen Daten.

Dadurch, dass die genannten Funktionen ausschließlich von den dezentralen Steuereinheiten 74, 76 übernommen werden, wird die zentrale Steuereinheit 58 entlastet.

## Patentansprüche

1. System (50) zur Erfassung und Anzeige des Abstandes von Fahrzeugen zu Hindernissen, mit einer zentralen Steuereinheit (58), mit mehreren Abstandsmesssensoren an einem Stoßfänger (54, 56) des Fahrzeugs und mit einem akustischen und/oder optischen Abstandsanzeigegerät (60, 62), wobei die zentrale Steuereinheit (58) mit den Abstandsmesssensoren (66, 68), mit dem Abstandsanzeigegerät (60, 62) und mit weiteren Fahrzeugsystemen, insbesondere einem BUS-System (55) und/oder einem Taster und/oder einem Geschwindigkeitsmesssystem, verbunden ist, wobei wenigstens eine dezentrale Steuereinheit (74, 76) nahe den Abstandsmesssensoren (66, 68) am Stoßfänger (54, 56) angeordnet ist, welche über Versorgungs- und/oder Kommunikationsleitungen (78) mit den Abstandsmesssensoren (66, 68) und über ein BUS-System (55) mit der zentralen Steuereinheit (58) verbunden ist, und wobei die Verbindung zwischen der zentralen Steuereinheit (58) und der dezentralen Steuereinheit (74, 76) eine lösbare Schnittstelle (80) aufweist, **dadurch gekennzeichnet, dass** die dezentrale Steuereinheit (74, 76) Codierdaten der Abstandsmesssensoren (66, 68) sowie stoßfängerspezifische Daten derart speichert und verarbeitet, dass die zentrale Steuereinheit (58)einheitlich, für verschiedene Arten von Stoßfängern (54, 56), programmiert ist.

2. System (50) nach Anspruch 1, **dadurch gekennzeichnet, dass** im Bereich eines vorderen Stoßfängers (54) Abstandsmesssensoren (66) und eine erstes dezentrale Steuereinheit (74) und im Bereich eines hinteren Stoßfängers (56) Abstandsmesssensoren (68) und eine zweite dezentrale Steuereinheit (76) angeordnet sind.

3. System (50) nach einem der vorhergehenden Ansprüche, **dadurch gekennzeichnet, dass** die dezentrale Steuereinheit (74, 76) von der zentralen Steuereinheit (58) über das BUS-System (55) gesendete Aktivierungs-und/oder Deaktivierungsinformationen liest und verarbeitet

## Claims

1. A system (50) for detecting and displaying the distance of vehicles from obstacles, having a central control unit (58) with a plurality of.distance measuring sensors (66, 68) on a bumper (54, 56) of the vehicle, and having an acoustic and/or optical distance display device (60, 62), wherein the central control unit (58) is connected with the distance measuring sensors (66, 68), with the distance display device (60, 62) and with further vehicle systems, in particular a bus system (55) and/or a keying device, and or a speedometer, wherein at least one decentralized control unit (74, 76) is arranged close to the distance measuring sensors (66, 68) on the bumper (54, 56) and is connected via supply and/or communications lines (78) with the distance measuring sensors (66, 68) and via a bus system (55) with the central control unit (58), and wherein the connection between the central control unit (58) and the decentralized control unit (74, 76) has a releasable interface (80), **characterized in that** the decentralized control unit (74, 76) stores and processes coded data from the distance measuring sensors (66, 68), as well as bumper-specific data, in such a way that the central control unit (58) is uniformly programmed for various types of bumpers (54, 56).

2. The system (50) in accordance with claim 1, **characterized in that** distance measuring sensors (66) and a first decentralized control unit (74) are arranged in the area of the front bumper (54), and distance measuring sensors (68) and a second decentralized control unit (76) are arranged in the area of a rear bumper (56).

3. The system (50) in accordance with one of the preceding claims, **characterized in that** the decentralized control unit (74, 76) reads and processes activation and/or deactivation information transmitted from the central control unit (58) via the bus system (55).

## Revendications

1. Système (50) pour l'enregistrement et l'affichage de la distance de véhicules à des obstacles, comprenant une unité de commande (58) centrale, plusieurs capteurs de distance sur un pare-chocs (54, 56) du véhicule et un appareil d'affichage de distance (60, 62) sonore et/ou visuel, l'unité de commande (58) centrale étant reliée aux capteurs de mesure de distance (66, 68), à l'appareil d'affichage de distance (60, 62) et à d'autres systèmes de véhicule, en particulier un système de bus (55) et/ou un palpeur et/ou un système de mesure de vitesse, au moins une unité de commande (74, 76) décentralisée étant disposée à proximité des capteurs de distance de mesure (66, 68) sur le pare-chocs (54, 56), laquelle est reliée par des conduites d'alimentation et/ou de communication (78) aux capteurs de mesure de distance (66, 68) et par un système de bus (55) à l'unité de commande (58) centrale, et la liaison entre l'unité de commande (58) centrale et l'unité de commande (74, 76) décentralisée présentant une interface (80) amovible, **caractérisé en ce que** l'unité de commande (74, 76) décentralisée mémorise et traite des données de codage des capteurs de mesure de distance (66, 68) et des données spécifiques au pare-chocs de telle sorte que l'unité de commande (58) centrale est programmée de façon standard, pour différent types de pare-chocs (54, 56).

2. Système (50) selon la revendication 1, **caractérisé en ce que** des capteurs de mesure de distance (66) et une première unité de commande (74) décentralisée sont disposés dans la zone d'un pare-chocs (54) avant et des capteurs de mesure de distance (68) et une seconde unité de commande (76) décentralisée sont disposés dans la zone d'un pare-chocs (56) arrière.

3. Système (50) selon l'une quelconque des revendications précédentes, **caractérisé en ce que** l'unité de commande (74, 76) décentralisée lit et traite des informations d'activation et/ou de désactivation envoyées par l'unité de commande (58) centrale via le système de bus (55).
